# EUROPEAN PATENT APPLICATION

(11) **EP 1 221 748 A1**
(43) Date of publication of application: **10.07.2002**
(21) Application number: 02075012.1
(22) Date of filing: 02.01.2002
(51) Int. Cl.: H02B 7/08

(54) **A protective container for public utility equipment, adapted to be sunk in the ground**

(30) Priority: 05.01.2001 NL 1017037
(71) Applicant: Odink & Koenderink B.V., 7482 CA Haaksbergen (NL)
(72) Inventor: Kienhuis, Johannes Hendrikus Maria, 2591 GA Denekamp (NL)
(74) Representative: Riemens, Roelof Harm

(57) **Abstract**

A protective container for public utility equipment, adapted to be sunk in the ground, said container comprising an outer casing with an open upper end and an inner casing which is open at its lower end but is closed both circumferentially and at its upper end so as to function as an air chamber that contains the equipment to be protected and may be removed through the open upper end of the outer casing. Means are provided for passing air, according to a closed circuit, from a first location in the upper part of the inner casing via the space of the outer casing outside the inner casing to a second location in the upper part of the inner casing. The air within the inner casing is thereby prevented from being heated up - as a result of the heat developed by the equipment - too much which in turn presents the operating temperature of the equipment from raising too much.

## Description

The invention relates to a protective container for public utility equipment, adapted to be sunk in the ground, said container comprising an outer casing with an at least partly open in particular closeable upper end and an inner casing which is at least partly open at its lower end but is closed both circumferentially and at its upper end so as to function as an air chamber that contains the equipment to be protected and may be removed through the at least partly open upper end of the outer casing.

Such a protective container wherein - in case of (ground) water in the outer casing - the equipment is yet effectively protected within the "air bell" of the inner casing acting as an air chamber, is disclosed in EP-A-0929136.

With the known protective container the inner casing contains equipment that is connected to a supply or ground cable entering through the open lower end of the inner casing and operates to secure, divide and register the power supply to a plurality of plug sockets provided in individual boxes which also function each as an air chamber.

The present invention aims at providing an improved protective container of the type above referred to, which is especially suitable for protecting equipment which, in operation, develops heat that must be dissipated somehow. It will be appreciated that within a protective container sunk in the ground there will be normally hardly or no movement of air and that the air which is heated up due to the heat development by the equipment to be protected will simply remain trapped in the upper part of the inner casing.

According to the present invention the aim indicated hereinabove is achieved in that means are provided for passing air, according to a closed circuit, from a first location in an upper part of the inner casing via a space of the outer casing outside the inner casing to a second location in an upper part of the inner casing.

The improvement of the present invention has a dual effect. In the first place the air in the inner casing will get into agitation, which contributes to the heat exchange between this air and the equipment to be protected. In the second place an amount of air is constantly transferred from the inner casing into the cooler space outside the inner casing, where the air will be subjected to a certain cooling effect, so that this air, upon flowing back into the inner casing, will cause a decrease of the temperature of the air volume in the inner casing. Due to the air flow from and into the inner casing taking place according to a closed circuit, there will be no change of pressure in the inner casing.

In a simple and practical embodiment of the improved container of the present invention the said means comprise at least one tube, that extends from said first location substantially downwardly into the lower part of the outer casing and from there in a substantially upward direction towards said second location, whilst the tube is connected to the pressure side or suction side respectively of a fan or air pump which in particular is also provided within the inner casing.

A preferred embodiment of the improved container of the present invention is characterized in that a number of substantially U-shaped tubes is arranged in parallel planes next to (behind) one another. To increase the heat exchanging surface the tubes are advantageously formed as twin tubes.

The protective container of the present invention has proved to be particularly suitable for underground installation of transmitters for mobile telephone systems. Up to now increasing numbers of such transmitters have been and are still installed above ground level, which leads to inherent problems. Thus the protective container of the present invention provides a solution for these problems.

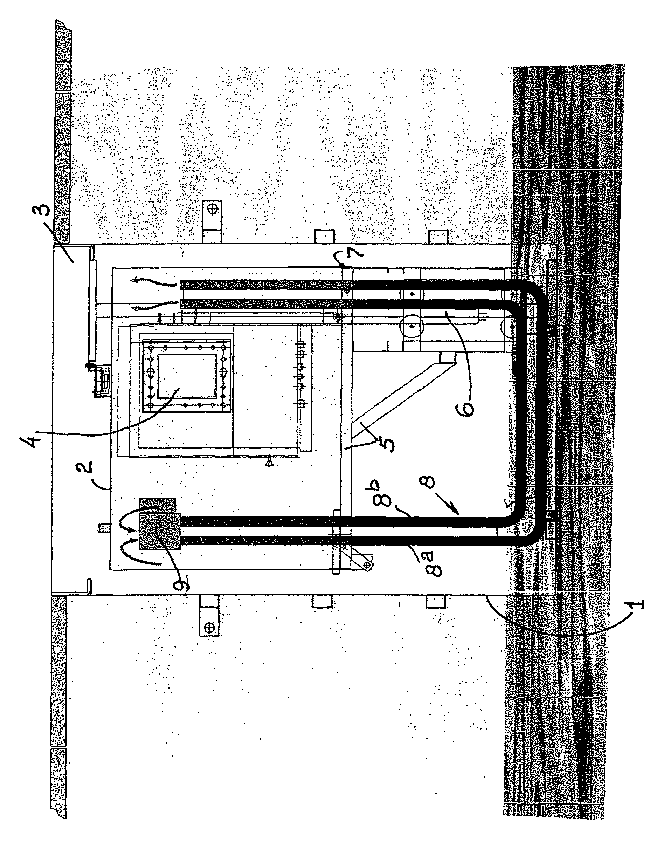

The invention will be hereinafter further explained by way of example with reference to the accompanying drawing, in which a vertical cross-sectional view through a protective container of the present invention is shown.

The protective container is sunk in the ground, e.g. into a sidewalk in front of a building, and comprises an outer container 1, with an open upper end that is closable by means of a cover 3, and an inner casing 2 placed within the outer casing 1.

In the example shown the outer casing is formed of suitably processed sheet metal, e.g. steel plate. A concrete casing or a casing formed in the ground from brick work, may be used instead. In principle the outer casing is not waterproof, so that rain and ground water may enter.

The inner box 2 is a box of e.g. steel plate, which has its opening directed downwardly and contains the equipment to be protected, such as a transmitter (not shown) for a mobile telephone system, which transmitter may be mounted on a frame 4, that is provided within the inner casing 2 and which is carried by the frame 5 to be described hereinafter.

Thus in normal use the inner casing 2 extends as a bell-jar over the equipment to be protected. In case of (ground) water within the outer casing 1 reaching a level above the lower edge of the inner casing 2, the inner casing 2 will function as an air chamber, that prevents the water from reaching the equipment.

The inner casing 2 is mounted, in a well-known manner, to a supporting frame 5, that is mounted for movement along a guide rail 6 provided at an inner sidewall of the outer casing 1, so that the frame may be lowered into the outer casing or be lifted from the outer casing to a level, at which the inner casing is positioned completely above the outer casing and may be tilted about an axis 7 if desired.

The special feature of the protective container shown herein is formed by a tube which is formed in the shape of an U and is indicated at 8 in the drawing. The tube 8 is mounted with its horizontal transverse section onto the bottom of the outer casing 1 and extends with its two legs into the inner casing 2. The tube 8 is formed as a "twin tube" so that it is, in fact, composed of two U-shaped tubes 8a and 8b of a reduced diameter and positioned in a common plane, whereby the legs and the transverse section of one tube 8a extend along the legs and the transverse section of the second tube 8b. By forming the tube 8 as a twin tube, the heat exchanging surface of the tube has been increased relative to the volume of the tube.

Preferably the protective container comprises a plurality of such tubes 8, which are positioned in planes parallel to the plane of the drawing.

Each of the tubes 8 ends with its two upper end portions into the upper part of the inner casing 2, at a relative short distance from the respective sidewalls of the inner casing. In the example shown the tube ends, located on the left side, are connected to a common inlet manifold 9. A fan or air pump may be connected with its pressure side to the manifold 9, to take air from the upper part of the inner casing 2 for transportation through the U-tubes 8 towards the inner casing area around the tube ends located on the right side (see the arrows). Thus the assembly of U-tubes is arranged to take air from the upper part of the inner casing 2 on the left side, which air is caused to flow back into the upper part of the inner casing 2 on the right side. The air transport from the left to the right via the U-tubes goes through the cooler region in the lower part of the outer casing 1 (which is usually at least partly filled with (ground) water), due to which the air taken on the left side will be subjected to a certain cooling before flowing back into the inner casing.

Tests have been carried out with the protective container described hereinabove, which tests have shown that the use of one or more fans or air pumps with a total capacity of some dozens of Watts is sufficient to keep a transmitter for a mobile telephone system with a power consumption of 400 Watt (of which only a fraction is efficiently used and the remainder is converted into heat that has to be dissipated via the air volume within the inner casing) at a temperature that does not exceed the critical value of 70°C. For the air movements produced by the fans or air pumps enable to keep the air within the inner casing at a temperature which in particular is less than 45°.

## Claims

1. A protective container for public utility equipment, adapted to be sunk in the ground, said container comprising an outer casing with an at least partly open in particular closeable upper end and an inner casing which is at least partly open at its lower end but is closed both circumferentially and at its upper end so as to function as an air chamber that contains the equipment to be protected and may be removed through the at least partly open upper end of the outer casing, **characterized in that** means are provided for passing air, according to a closed circuit, from a first location in an upper part of the inner casing via a space of the outer casing outside the inner casing to a second location in an upper part of the inner casing.

2. A protective container according to claim 1, **characterized in that** said means comprise at least one tube, that extends from said first location substantially downwardly into the lower part of the outer casing and from there in a substantially upward direction towards said second location, whilst the tube is connected to the pressure side or suction side respectively of a fan or air pump which in particular is also provided within the inner casing.

3. A protective container according to claim 2, **characterized in that** said tube is a U-shaped tube.

4. A protective container according to claim 2 or 3, **characterized in that** a number of substantially U-shaped tubes is arranged in parallel planes next to (behind) one another.

5. A protective container according to any of claims 2-4, **characterized in that** said or each tube is formed as a twin tube.

6. A protective container according to any of claims 2-5, **characterized in that** said or each tube is fixedly mounted in the outer casing and that the fan or air pump is supported by the tube or tubes.

7. Use of a protective container according to one of the preceding claims for underground installation of transmitters for mobile telephone systems.
